# EUROPEAN PATENT SPECIFICATION

(11) **EP 1 777 000 B1**
(45) Date of publication and mention of the grant of the patent: **21.09.2016**
(21) Application number: 05023085.3
(22) Date of filing: 21.10.2005
(51) Int. Cl.: B01J 10/00, B01J 19/26, B01J 4/00, C08F 10/00

(54) **Method for preparing linear alpha-olefins using a bubble column reactor**
Verfahren zur Herstellung von linearen alpha-Olefinen bei Verwendung einer Blasensäule
Procédé pour la préparation d' alpha -oléfines linnéaires en utilisation d' un réacteur à colonne de barbotage

(43) Date of publication of application: 25.04.2007
(73) Proprietor: Saudi Basic Industries Corporation, Riyadh 11422 (SA); Linde AG, 80331 München (DE)
(72) Inventor: Schneider, Richard, 82449 Uffing (DE); Fritz, Peter M., 82008 Unterhaching (DE); Muschelknantz, Sebastian, 81479 München (DE); Bölt, Heinz, 82515 Wolfratshausen (DE); Ali, Talal, 11422 Riyadh (SA); Mosa, Fuad, 11422 Riyadh (SA)
(74) Representative: Harris, Oliver John Richard

(56) References cited:
- GB-A- 1 250 222
- US-A- 3 004 016
- US-A- 5 019 268
- US-A1- 2003 129 110

## Description

The present invention relates to a method for preparing linear alpha-olefins (LAO) using a bubble column reactor comprising a column reactor having a sparger plate dividing the column reactor into a top reaction compartment and a bottom compartment.

Bubble column reactors are widely known in the art. A bubble column reactor is, for example, utilized for the oligomerization of ethylene to form linear alpha-olefins (LAO). Such a bubble column reactor comprises a column reactor which is divided by a sparger plate into an upper reaction compartment and a bottom compartment. Via the bottom compartment a gaseous feed of monomer(s) is introduced into the column reactor and passes through the sparger plate and into the homogenous solution comprising monomer(s), solvent and catalyst in the upper compartment to then form linear alpha-olefins. From the top of the upper reaction compartment gaseous products and the like are removed. Further, a line is provided to remove a liquid mixture comprising solvent, catalyst, dissolved monomer(s) and linear alpha-olefins.

In conventional bubble column reactors there is a problem that weeping of the sparger plate may occur which may lead to a filling of the bottom compartment. This may often have the disadvantages that a potential mechanical damage may occur, the gas distribution above the sparger plate may be disturbed and plugging of the bottom compartment and outlet lines due to reactive material below the sparger plate may take place.

It is therefore an object of the present invention to provide a method for preparing linear alpha-olefins (LAO) using a bubble column reactor which overcomes the drawbacks of the prior art. Especially, a method shall be provided wherein the consequences of weeping of the sparger plate in the bubble column reactor may be avoided or at least controlled.

The object is further achieved by a method for preparing linear alpha-olefins (LAO) using a bubble column reactor comprising a column reactor having a sparger plate dividing the column reactor into a top reaction compartment which is at least partly filled with a homogeneous mixture comprising solvent, monomer, catalyst and already prepared linear alpha-olefins, and a bottom compartment, wherein flushing medium is introduced into and disposed of the bottom compartment via inlet line and outlet line, respectively. Preferably, the outlet line is connected to piping or equipment downstreams of the column reactor.

In one embodiment, the flushing medium is selected from the group consisting of linear alpha olefins or aromatics.

Preferably, the flushing medium is transferred from the outlet line to piping or equipment downstreams of the column reactor.

Even preferred, a gaseous feed of monomer(s) is introduced into the bottom compartment.

Finally, in a most preferred embodiment ,the bottom compartment is continuously flushed.

Surprisingly, it was found that disadvantages of operating conventional bubble column reactors may be overcome in that the bottom compartment of the column reactor is, preferably continuously, flushed with a flushing medium. By flushing the bottom compartment material (caused by weeping of the sparger plate), being reactive or un-reactive, may be disposed of the bottom compartment. Preferably, the flushed medium is transferred to pipings or equipment which are located downstreams of the column reactor. Even preferred, a control unit is provided for the bubble column reactor controlling the inlet and outlet rates of the flushing medium into and out of the bottom compartment, and also preferably controlling the discharge rate of outlet streams leaving the column reactor above the sparger plate.

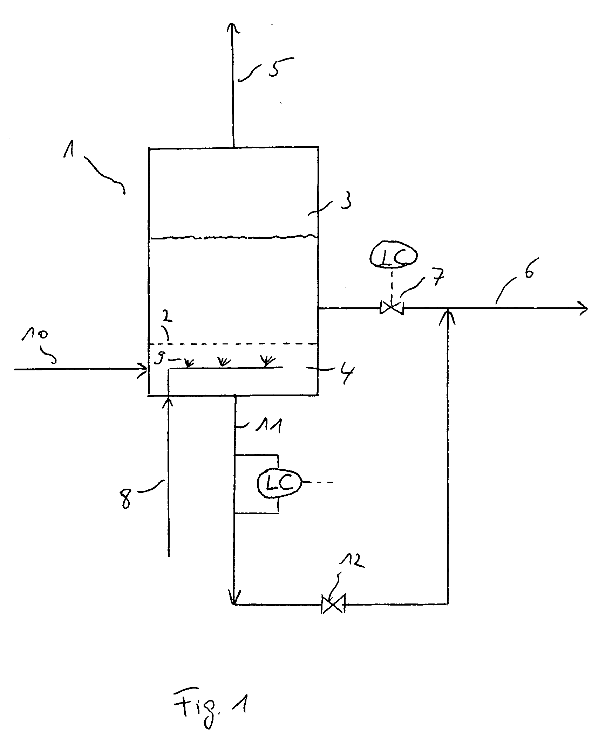

Additional advantages and features of the method are further illustrated with reference to the accompanying drawing, wherein figure 1 illustrates a schematic diagram of an bubble column reactor.

According to figure 1, a bubble column reactor is shown having a sparger plate 2 dividing a column reactor 1 into a top reaction compartment 3 and a bottom compartment 4. As can be seen, the top reaction compartment 3 is at least partly filled with a homogenous mixture comprising solvent, monomer(s), catalyst and already prepared linear alpha-olefins. Via line 5 gaseous components may be removed from the top reaction compartment 3 which may comprise solvent, monomer(s) and gaseous linear alpha-olefins, for further processing. Further, line 6 having a valve 7 is provided to remove a liquid mixture comprising solvent, dissolved monomer(s), catalyst and liquid linear alpha-olefins from the column reactor 1 for further processing.

Via feed line 8 a gaseous feed of monomer(s) may be introduced into the bottom compartment 4 and may be distributed via one or more nozzles 9 or the like. The distributed gaseous feed may then pass through the sparger plate 2 and distribute into the homogenous mixture in the top reaction compartment.

The column reactor 1 additionally comprises an inlet line 10 for introducing flushing medium into the bottom compartment 4. The flushing medium may be disposed of the bottom compartment 4 via an outlet line 11 having a valve 12. The outlet line 11 is, according to the embodiment shown in figure 1, connected to further piping or equipment downstreams of the column reactor 1 to be further processed.

A control unit (not shown) may be also provided for controlling the inlet and outlet rate of the flushing medium into and out of the bottom compartment 4, and for controlling the valve 7 and other equipment not shown.

Preferably, the bottom column is continuously flushed with flushing medium. Even preferred, the flushing medium is spread over the substantially whole bottom compartment to provide an intensive and sufficient flushing thereof.

The method of using the bubble column reactor may not avoid weeping of the sparger plate, but overcomes the consequences related thereto, such as potential mechanical damage, disturbance of the gas distribution above the sparger plate and plugging of the bottom compartment and outlet lines due to material below the sparger plate.

The features disclosed in the foregoing description, in the claims and in the drawing may, both separately and in any combination thereof, be material for realizing the invention in diverse forms thereof.

## Claims

1. Method for preparing linear alpha-olefins (LAO) using a bubble column reactor comprising a column reactor (1) having a sparger plate (2) dividing the column reactor (1) into a top reaction compartment (3) which is at least partly filled with a homogeneous mixture comprising solvent, monomer, catalyst and already prepared linear alpha-olefins, and a bottom compartment (4), wherein flushing medium is introduced into and disposed of the bottom compartment (4) via an inlet line (10) and outline line (11), respectively.

2. Method according to claim 1, wherein the flushing medium is transferred from the outlet line (11) to piping or equipment downstreams of the column reactor.

3. Method according to claim 1 or 2, wherein a gaseous feed of monomer(s) is introduced into the bottom compartment (4).

4. Method according to any of the claims 1 to 3, wherein the bottom compartment (4) is continuously flushed.

5. Method according to any of the preceding claims 1 to 4, wherein the flushing medium is selected from the group consisting of linear alpha olefins or aromatics.

6. Method according to any of the preceding claims, wherein a control unit controls inlet and outlet rates of the flushing medium.

## Patentansprüche

1. Verfahren zur Herstellung linearer alpha-Olefine (LAO) unter Verwendung eines Blasensäulenreaktors mit einem Säulenreaktor (1), der eine Gasverteilerplatte (2) aufweist, die den Säulenreaktor (1) in eine obere Reaktionskammer (3), die zumindest teilweise mit einer homogenen Mischung umfassend Lösemittel, Monomer, Katalysator und bereits hergestellte lineare alpha-Olefine gefüllt ist, und eine untere Kammer (4), wobei ein Spülmedium jeweils über eine Einlassleitung (10) und eine Auslassleitung (11) in die untere Kammer (4) eingeleitet bzw. aus dieser abgegeben wird.

2. Verfahren nach Anspruch 1, wobei das Spülmedium von der Auslassleitung (11) an eine Leitung oder Anlage stromabwärts des Säulenreaktors übertragen wird.

3. Verfahren nach Anspruch 1 oder 2, wobei ein gasförmiger Speisestrom aus Momomer(en) in die untere Kammer (4) eingeleitet wird.

4. Verfahren nach einem der Ansprüche 1 bis 3, wobei die untere Kammer (4) kontinuierlich gespült wird.

5. Verfahren nach einem der vorhergehenden Ansprüche 1 bis 4, wobei das Spülmedium ausgewählt ist aus der Gruppe bestehend aus linearen alpha-Olefinen oder Aromaten.

6. Verfahren nach einem der vorhergehenden Ansprüche, wobei eine Steuereinheit die Einlass- und Auslassraten des Spülmediums steuert.

## Revendications

1. Procédé de préparation d'alpha-oléfines linéaires (LAO) en utilisant un réacteur à colonne à bulles comprenant un réacteur à colonne (1) ayant une plaque d'aérateur (2) divisant le réacteur à colonne (1) en un compartiment supérieur (3) de réaction qui est au moins partiellement rempli d'un mélange homogène comprenant un solvant, un monomère, un catalyseur et des alpha-oléfines linéaires déjà préparées, et un compartiment inférieur (4), dans lequel un milieu de rinçage est introduit dans et éliminé à partir du compartiment inférieur (4) par l'intermédiaire d'une conduite d'entrée (10) et d'une conduite de sortie (11), respectivement.

2. Procédé selon la revendication 1, dans lequel le milieu de rinçage est transféré de la conduite de sortie (11) vers une canalisation ou un équipement en aval du réacteur à colonne.

3. Procédé selon la revendication 1 ou 2, dans lequel un flux gazeux de monomère(s) est introduit dans le compartiment inférieur (4).

4. Procédé selon l'une des revendications 1 à 3, dans lequel le compartiment inférieur (4) est rincé en continu.

5. Procédé selon l'une des revendications précédentes 1 à 4, dans lequel le milieu de rinçage est choisi dans le groupe constitué par des alpha-oléfines linéaires ou aromatiques.

6. Procédé selon l'une des revendications précédentes, dans lequel une unité de commande, commande des taux d'entrée et de sortie du milieu de rinçage.
